# EUROPÄISCHE PATENTANMELDUNG

(11) **EP 2 503 671 A1**
(43) Veröffentlichungstag der Anmeldung: **26.09.2012**
(21) Anmeldenummer: 11159192.1
(22) Anmeldetag: 22.03.2011
(51) Int. Cl.: H02K 1/24, H02K 19/24, H02K 21/04

(54) **Synchronmaschine mit optimierter statorfester Erregereinrichtung**

(71) Anmelder: SIEMENS AKTIENGESELLSCHAFT, 80333 München (DE)
(72) Erfinder: Klöpzig, Markus, 91320, Ebermannstadt (DE); Schramm, Marco, 90489, Nürnberg (DE)

(57) **Zusammenfassung**

Eine Synchronmaschine weist einen um eine Rotationsachse (2) rotierbaren Rotor (1) und einen den Rotor (1) radial außen umgebenden Stator (3) auf. Der Rotor (1) weist in Axialrichtung gesehen eine Anzahl von tangential um die Rotationsachse (2) umlaufenden Rotorringen (5) auf. Die Rotorringe (5) weisen in Tangentialrichtung um die Rotationsachse (2) gesehen jeweils eine Mehrzahl von Klauen (8) auf, die aus einem weichmagnetischen Material bestehen. Die Klauen (8) sind L-förmig ausgebildet, so dass sie jeweils einen ersten und einen zweiten Schenkel (9,9') aufweisen. Die Synchronmaschine weist eine statorfeste Erregereinrichtung (10) auf, die für die Rotorringe (5) jeweils einen mit dem jeweiligen Rotorring (5) zusammenwirkenden Magnetfeldgenerator (11) aufweist. Der jeweilige Magnetfeldgenerator (11) ist radial innerhalb des jeweiligen Rotorrings (5) angeordnet. Er generiert ein in Axialrichtung gerichtetes Magnetfeld und ist im Bereich des radial inneren Abschlusses (7) magnetisch an die zweiten Schenkel (9') der Klauen (8) des jeweiligen Rotorrings (5) angekoppelt.

## Beschreibung

Synchronmaschine mit optimierter statorfester Erregereinrichtung

Die vorliegende Erfindung betrifft eine Synchronmaschine,
- wobei die Synchronmaschine einen um eine Rotationsachse rotierbaren Rotor und einen den Rotor radial außen umgebenden Stator aufweist,
- wobei der Rotor in Axialrichtung gesehen eine Anzahl von tangential um die Rotationsachse umlaufenden Rotorringen aufweist,
- wobei die Rotorringe in Axialrichtung gesehen jeweils einen axial vorderen und einen axial hinteren Abschluss aufweisen,
- wobei die Rotorringe in Radialrichtung gesehen jeweils einen radial inneren und einen radial äußeren Abschluss aufweisen,
- wobei die Synchronmaschine eine statorfeste Erregereinrichtung aufweist, die für die Rotorringe jeweils einen mit dem jeweiligen Rotorring zusammenwirkenden Magnetfeldgenerator aufweist.

Elektrische Maschinen sind in vielen Ausgestaltungen bekannt, beispielsweise als Gleichstrommaschinen, als einphasige Wechselstrommaschinen oder als Drehstrommaschinen. Bei Drehstrommaschinen wiederum wird zwischen Asynchronmaschinen und Synchronmaschinen unterschieden. Die vorliegende Erfindung betrifft Synchronmaschinen.

Bei Synchronmaschinen muss der Rotor erregt werden. Es ist möglich, die Erregung mittels Permanentmagneten zu bewirken. Bei permanent erregten Synchronmaschinen wird vorwiegend Magnetmaterial auf Basis von seltenen Erden eingesetzt, um eine möglichst hohe Drehmoment- und Leistungsdichte zu erzielen. Weiterhin zeichnen sich diese Synchronmaschinen insbesondere im Teillastbereich, bei geringen Drehzahlen und hohen Drehmomentanforderungen durch einen relativ hohen Wirkungsgrad aus, da aufgrund der permanentmagnetischen Erregung nahezu keine rotorseitigen Verluste entstehen. Alternativ können Synchronmaschinen elektrisch erregt sein. Bei elektrisch erregten Synchronmaschinen entstehen bei hohen Drehmomentanforderungen vergleichsweise hohe Rotorwicklungsverluste, so dass die Effizienz derartiger Synchronmaschinen in diesem Bereich geringer ist als bei permanentmagnetischer Erregung. Elektrisch erregte Synchronmaschinen sind jedoch im Feldschwächungsbereich bei hohen Drehzahlen effizienter zu betreiben. Insbesondere benötigen elektrisch erregte Synchronmaschinen oberhalb der Spannungsgrenze keinen parasitären Feldschwächungsstrom, sondern lediglich eine Reduzierung der Erregung. Dadurch reduzieren sich sowohl die Ummagnetisierungsverluste als auch die statorseitigen Verluste, da nur drehmomentbildender Strom (in Querachse) benötigt wird.

Es ist auch schon bekannt, eine permanentmagnetische und eine elektrische Erregung miteinander zu kombinieren. Auf diese Weise kann man von den Effizienzvorteilen beider Erregungsarten profitieren. Insbesondere sollte in diesem Fall eine Grunderregung permanentmagnetisch ausgeführt sein. Für kurzzeitige hohe Drehmomentanforderungen wird in diesem Fall aufgrund einer zusätzlichen elektrischen Erregung der magnetische Fluss erhöht.

Bei elektrischer Erregung wird die benötigte elektrische Energie in der Regel über Schleifringsysteme oder über transformatorische Übertragersysteme in den Rotor eingespeist. Schleifringsysteme sind verschleißbehaftet, transformatorische Übertragersysteme erfordern einen erhöhten Material- und Kostenaufwand.

Alternativ ist bekannt, mittels einer statorfesten Erregereinrichtung ein magnetisches Gleichfeld zu generieren und das magnetische Gleichfeld auf den Rotor zu übertragen. Diese Vorgehensweise zeichnet sich durch eine Reihe von Vorteilen aus. Einerseits werden keine Rotorwicklungen benötigt, weshalb im Rotor auch keine Kupferverluste und dadurch verursachte Erwärmungen des Rotors auftreten. Da es sich um ein magnetisches Gleichfeld handelt, kommt es weiterhin nicht zu Ummagnetisierungsverlusten. Etwaige Elektromagnete der statorfesten Erregereinrichtung rotieren nicht und können daher insbesondere auf einfache Weise gekühlt werden.

Die Aufgabe der vorliegenden Erfindung besteht darin, eine Synchronmaschine, die eine statorfeste Erregereinrichtung aufweist, in optimierter Weise zu gestalten.

Die Aufgabe wird durch eine Synchronmaschine mit den Merkmalen des Anspruchs 1 gelöst. Vorteilhafte Ausgestaltungen der erfindungsgemäßen Synchronmaschine sind Gegenstand der abhängigen Ansprüche 2 bis 9.

Erfindungsgemäß ist vorgesehen, eine Synchronmaschine der eingangs genannten Art dadurch auszugestalten,
- dass die Rotorringe in Tangentialrichtung um die Rotationsachse gesehen jeweils eine Mehrzahl von aus einem weichmagnetischen Material bestehenden Klauen aufweisen,
- dass die Klauen L-förmig ausgebildet sind, so dass sie jeweils einen ersten und einen zweiten Schenkel aufweisen,
- dass die ersten Schenkel den an den Stator angrenzenden radial äußeren Abschluss des jeweiligen Rotorrings bilden,
- dass die zweiten Schenkel alternierend im Bereich des axial vorderen und des axial hinteren Abschlusses des jeweiligen Rotorrings nach radial innen verlaufen und
- dass der jeweilige Magnetfeldgenerator radial innerhalb des jeweiligen Rotorrings angeordnet ist, ein in Axialrichtung gerichtetes Magnetfeld generiert und im Bereich des radial inneren Abschlusses magnetisch an die zweiten Schenkel der Klauen des jeweiligen Rotorrings angekoppelt ist.

Zur Optimierung des magnetischen Flusses ist der Magnetfeldgenerator vorzugsweise axial beidseitig mit jeweils einem Flussführungselement abgeschlossen, mittels dessen der magnetische Fluss nach radial außen in die zweiten Schenkel der Klauen des jeweiligen Rotorrings geleitet wird.

Vorzugsweise gehen die zweiten Schenkel der Klauen des jeweiligen Rotorrings in zwei Flussabnehmerringe über, welche die Flussführungselemente radial außen umgeben. Dadurch kann insbesondere erreicht werden, dass die Flussübertragung vergleichmäßigt ist.

Um die Stabilität der Rotorringe zu gewährleisten, ohne die magnetischen Eigenschaften der Rotorringe negativ zu beeinflussen, bestehen die Rotorringe im Bereich zwischen den Klauen vorzugsweise aus einem Füllmaterial, das dia- oder paramagnetisch ist und elektrisch isolierend oder nur anisotrop leitend ist.

Der Magnetfeldgenerator kann alternativ als Permanentmagnet, als Elektromagnet oder als Kombination eines Permanentmagneten und eines Elektromagneten ausgebildet sein.

Es ist möglich, dass ein radialer Abstand der äußeren Seite der ersten Schenkel in Tangentialrichtung um die Rotationsachse gesehen konstant ist. In einer bevorzugten Ausgestaltung der vorliegenden Erfindung variiert der radiale Abstand jedoch.

Die Anzahl an Rotorringen kann beliebig sein. In manchen Fällen ist es ausreichend, wenn nur ein einziger Rotorring vorhanden ist. In vielen Fällen ist die Anzahl an Rotorringen jedoch größer als eins. Beispielsweise können 2, 3, 4 usw. Rotorringe vorhanden sein.

Falls mehrere Rotorringe vorhanden sind, sind in Bezug auf in Axialrichtung aneinander angrenzende Rotorringe die dem jeweils anderen Rotorring zugewandten zweiten Schenkel der Klauen vorzugsweise gleichsinnig magnetisiert.

Die Rotorringe weisen in Tangentialrichtung um die Rotationsachse gesehen eine Periodizität auf. In einer möglichen Ausgestaltung der vorliegenden Erfindung sind in Axialrichtung aneinander angrenzende Rotorringe um einen Winkel um die Rotationsachse gegeneinander verdreht, wobei der Winkel kleiner als ein sechstel der Periodizität ist. Durch diese Ausgestaltung der Synchronmaschine wird zwar deren Leistungsausbeute (d.h. die bei gegebener Baugröße erzielbare Leistung) verringert. Im Gegenzug ergibt sich jedoch ein besserer Gleichlauf, weil Pendel- und Rastmomente verringert werden.

Im Falle mehrerer Rotorringe können die mit den Rotorringen zusammenwirkenden Magnetfeldgeneratoren gleichartig ausgebildet sein, also beispielsweise alle als Permanentmagnete oder alle als Elektromagnete. Die Magnetfeldgeneratoren können jedoch unabhängig voneinander ausgestaltet sein. Es ist also möglich, dass einer der Magnetfeldgeneratoren als Permanentmagnet und ein anderer der Magnetfeldgeneratoren als Elektromagnet oder als Kombination eines Permanentmagneten und eines Elektromagneten ausgebildet ist oder dass der eine Magnetfeldgenerator als Elektromagnet und der andere Magnetfeldgenerator als Kombination eines Permanentmagneten und eines Elektromagneten ausgebildet ist.

Weitere Vorteile und Einzelheiten ergeben sich aus der nachfolgenden Beschreibung eines Ausführungsbeispiels in Verbindung mit den Zeichnungen. Es zeigen in Prinzipdarstellung:
- FIG 1: schematisch in einer perspektivischen, teilge-schnittenen Darstellung eine Synchronmaschine,
- FIG 2: schematisch in perspektivischer, teilgeschnit-tener Darstellung einen Rotor und eine stator-feste Erregereinrichtung der Synchronmaschine von FIG 1,
- FIG 3: schematisch in perspektivischer, teilgeschnit-tener Darstellung Klauen des Rotors von FIG 2,
- FIG 4 und 5: schematische mögliche Ausgestaltungen eines Magnetfeldgenerators,
- FIG 6: schematisch einen Querschnitt durch einen ers-ten Schenkel und
- FIG 7 bis 9: schematisch in abgerollter Darstellung mögli-che Abfolgen von zweiten Schenkeln.

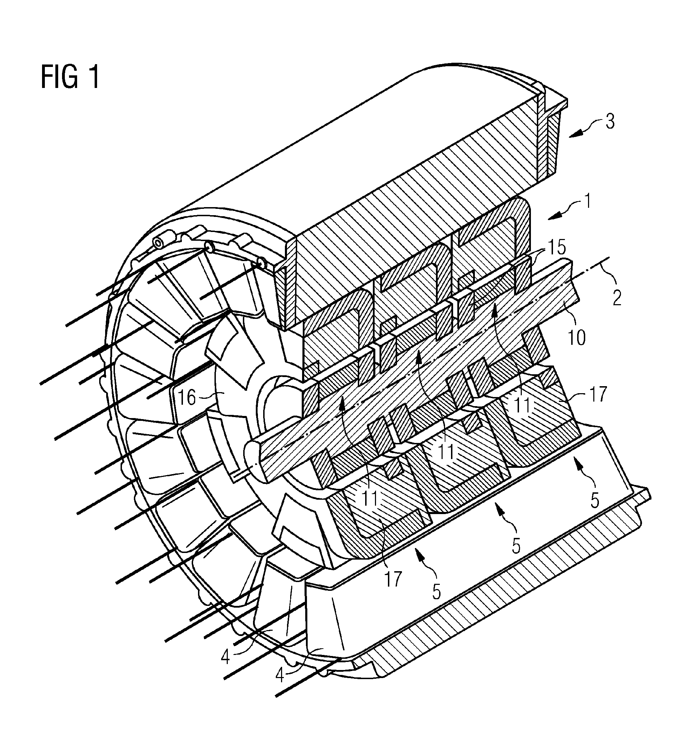

Gemäß den FIG 1 bis 3 weist eine Synchronmaschine einen Rotor 1 auf. Der Rotor 1 ist um eine Rotationsachse 2 rotierbar. Die Synchronmaschine weist weiterhin einen Stator 3 auf, der den Rotor 1 radial außen umgibt. Im Stator 3 sind Wicklungen 4 eines Drehstromsystems angeordnet.

Die Rotationsachse 2 definiert ein zylindrisches Koordinatensystem der Synchronmaschine. Die Begriffe "axial", "radial" und "tangential" sind stets auf die Rotationsachse 2 bezogen. Der Begriff "axial" bedeutet eine Richtung parallel zur Rotationsachse 2. Der Begriff "radial" bedeutet eine Richtung orthogonal zur Rotationsachse 2 auf die Rotationsachse 2 zu bzw. von ihr weg. Der Begriff "tangential" bedeutet eine Richtung, die sowohl zur Axialrichtung als auch zur Radialrichtung orthogonal verläuft. Der Begriff "tangential" bedeutet damit eine Richtung in konstantem radialem Abstand um die Rotationsachse 2 herum.

Der Rotor 1 weist in Axialrichtung gesehen eine Anzahl von Rotorringen 5 auf. Die Rotorringe 5 laufen tangential um die Rotationsachse 2 um. Dargestellt sind in den FIG 1 bis 3 drei derartige Rotorringe 5. Die Anzahl an Rotorringen 5 ist jedoch beliebig wählbar. Minimal ist ein einziger Rotorring vorhanden. Alternativ können zwei, drei, vier usw. Rotorringe 5 vorhanden sein.

Die Rotorringe 5 weisen in Axialrichtung gesehen jeweils einen axial vorderen und einen axial hinteren Abschluss 6, 6' auf. Sie erstrecken sich also in Axialrichtung gesehen vom jeweiligen axial vorderen Abschluss 6 zum jeweiligen axial hinteren Abschluss 6'. In analoger Weise weisen die Rotorringe 5 in Radialrichtung gesehen jeweils einen radial inneren und einen radial äußeren Abschluss 7, 7' auf. Sie erstrecken sich also in Radialrichtung gesehen vom jeweiligen radial inneren Abschluss 7 zum jeweiligen radial äußeren Abschluss 7'. Die Rotorringe 5 erstrecken sich in Radialrichtung gesehen nicht bis zur Rotationsachse 2. Die radial inneren Abschlüsse 7 der Rotorringe 5 sind daher von der Rotationsachse 2 beabstandet.

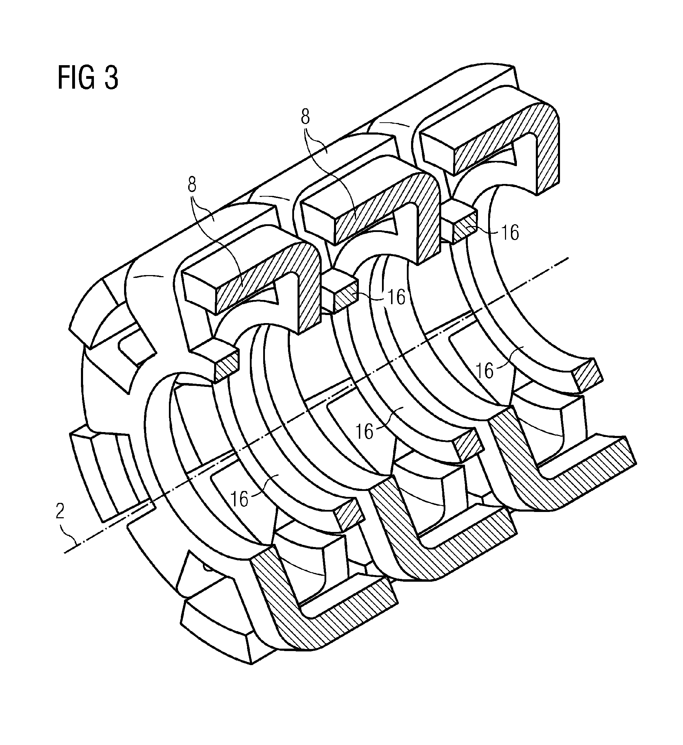

Wie besonders deutlich aus FIG 3 erkennbar ist, weisen die Rotorringe 5 in Tangentialrichtung um die Rotationsachse 2 gesehen jeweils eine Mehrzahl von Klauen 8 auf. Die Klauen 8 bestehen aus einem weichmagnetischen Material. Weichmagnetische Materialien sind, wie Fachleuten allgemein bekannt ist, ferromagnetische Materialien, die sich zwar leicht magnetisieren lassen und ein vorhandenes Magnetfeld führen und deutlich verstärken. Im Gegensatz zu permanentmagnetischen Materialien weisen sie jedoch nur eine sehr kleine Hysterese auf, sind selbst also nur in sehr geringem Umfang magnetisch im Sinne von permanentmagnetisch. Beispiele derartiger Materialien sind Weicheisen und Elektroblech. Ein alternatives Material ist SMC (= sintered magnetic compound).

Die Klauen 8 sind - siehe insbesondere FIG 3 L-förmig ausgebildet. Sie weisen also jeweils einen ersten Schenkel 9 und einen zweiten Schenkel 9' auf. Die ersten Schenkel 9 bilden den radial äußeren Abschluss 7' des jeweiligen Rotorrings 5, der an den Stator 3 angrenzt. Die zweiten Schenkel 9' verlaufen alternierend im Bereich des axial vorderen Abschlusses 6 und im Bereich des axial hinteren Abschlusses 6' des jeweiligen Rotorrings 5 nach radial innen.

Die Synchronmaschine weist weiterhin eine statorfeste Erregereinrichtung 10 auf. Die statorfeste Erregereinrichtung 10 weist für die Rotorringe 5 jeweils einen Magnetfeldgenerator 11 auf, der mit dem jeweiligen Rotorring 5 zusammenwirkt. Die statorfeste Erregereinrichtung 10 und mit ihr die Magnetfeldgeneratoren 11 sind im Bereich der Rotationsachse 2 angeordnet. Insbesondere ist für die Rotorringe 5 der jeweilige Magnetfeldgenerator 11 radial innerhalb des jeweiligen Rotorrings 5 angeordnet.

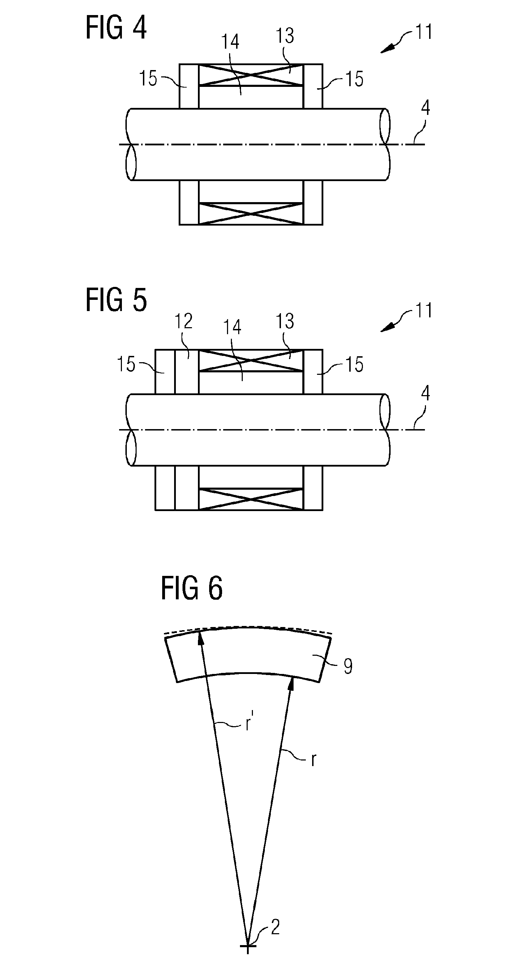

Der jeweilige Magnetfeldgenerator 11 generiert ein in Axialrichtung gerichtetes Magnetfeld. Der Magnetfeldgenerator 11 kann zu diesem Zweck beispielsweise entsprechend der Darstellung der FIG 1 bis 3 als Permanentmagnet 12 ausgebildet sein. Alternativ - siehe FIG 4 - kann der Magnetfeldgenerator 11 als Elektromagnet 13 nebst Joch 14 ausgebildet sein. Wiederum alternativ - siehe FIG 5 - kann der Magnetfeldgenerator 11 als Kombination eines Permanentmagneten 12 und eines Elektromagneten 13 nebst Joch 14 ausgebildet sein. Welche dieser Ausgestaltungen realisiert wird, steht im Belieben des Fachmanns. Unabhängig davon, welche Ausgestaltung realisiert ist, ist der Magnetfeldgenerator 11 jedoch im Bereich des radial inneren Abschlusses 7 des jeweiligen Rotorrings 5 - insbesondere im Übergangsbereich vom jeweiligen radial inneren Abschluss 7 zu den axialen Abschlüssen 6, 6' des jeweiligen Rotorrings 5 - magnetisch an die zweiten Schenkel 9' der Klauen 8 des jeweiligen Rotorrings 5 angekoppelt. Das vom Magnetfeldgenerator 11 generierte Magnetfeld wird also, ausgehend vom Magnetfeldgenerator 11, in die zweiten Schenkel 9' eingeleitet und von dort weiter in die ersten Schenkel 9 geleitet.

Zur Optimierung der Einleitung des Magnetfeldes in die zweiten Schenkel 9' ist weiterhin der jeweilige Magnetfeldgenerator 11 axial beidseitig mit jeweils einem Flussführungselement 15 abgeschlossen. Die Flussführungselemente 15 sind vorzugsweise ringförmig ausgebildet und leiten den magnetischen Fluss des jeweiligen Magnetfeldgenerators 11 nach radial außen in die zweiten Schenkel 9' der Klauen 8 des jeweiligen Rotorrings 5.

Es ist möglich, dass die im Bereich des axial vorderen Abschlusses 6 verlaufenden zweiten Schenkel 9' an ihren radial inneren Enden nicht miteinander verbunden sind. Gleiches gilt für die im Bereich des axial hinteren Abschlusses 6' verlaufenden zweiten Schenkel 9'. Vorzugsweise jedoch gehen die zweiten Schenkel 9' der Klauen 8 des jeweiligen Rotorrings 5 in zwei Flussabnehmerringe 16 über, welche die Flussführungselemente 15 radial außen umgeben. Die Flussabnehmerringe 16 sind somit insbesondere in Axialrichtung gesehen im selben Axialbereich angeordnet wie die Flussführungselemente 15.

Die Rotorringe 5 bestehen im Bereich zwischen den Klauen 8 aus einem Füllmaterial 17. Das Füllmaterial 17 ist vorzugsweise elektrisch und magnetisch neutral. Die magnetische Neutralität wird insbesondere dadurch bewirkt, dass das Füllmaterial 17 diamagnetisch oder paramagnetisch ist. Die elektrische Neutralität ist insbesondere dadurch bewirkt, dass das Füllmaterial 17 elektrisch isolierend ist. Alternativ kann die elektrische Neutralität dadurch bewirkt werden, dass das Füllmaterial 17 zwar elektrisch leitend ist, die Leitfähigkeit jedoch anisotrop ist. Insbesondere sollte in diesem Fall die elektrische Leitfähigkeit nur in einer Richtung gegeben sein und in zwei dazu orthogonalen Richtungen nicht gegeben sein. Beispiele geeigneter Füllmaterialien 17 sind Glasfaserwerkstoffe, Kohlefaserwerkstoffe und Kunststoffe (insbesondere Polyimide).

Gemäß FIG 6 erstrecken sich die ersten Schenkel 9 über einen Tangentialbereich. Die radial inneren Seiten der ersten Schenkel 9 weisen von der Rotationsachse 2 einen radialen Abstand r auf. Die radial äußeren Seiten der ersten Schenkel 9 weisen von der Rotationsachse 2 einen radialen Abstand r' auf. Der radiale Abstand r der radial inneren Seiten ist in der Regel konstant. Der Abstand r' der radial äußeren Seiten kann ebenfalls konstant sein. Dies ist in FIG 6 gestrichelt angedeutet. Der radiale Abstand r' der radial äußeren Seiten kann jedoch alternativ variieren, siehe in FIG 6 die entsprechende durchgezogene Linie. Insbesondere kann der radiale Abstand r' der radial äußeren Seiten zu den in Tangentialrichtung gesehen benachbarten ersten Schenkel 9 hin minimal werden.

Die bisherigen Erläuterungen der vorliegenden Erfindung sind unabhängig von der Anzahl an Rotorringen 5. Die nachfolgend beschriebenen Ausgestaltungen setzen voraus, dass die Anzahl an Rotorringen 5 größer als eins ist.

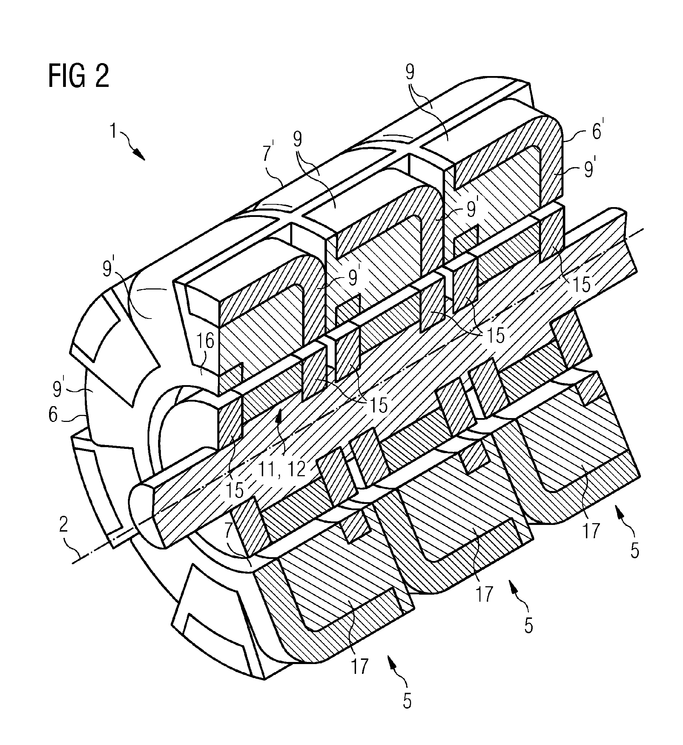

Die einzelnen Rotorringe 5 weisen in Tangentialrichtung um die Rotationsachse 2 herum eine Periodizität auf (oftmals auch als Polteilung bezeichnet). Wie besonders deutlich aus den FIG 2 und 3 ersichtlich ist, weisen die Rotorringe 5 beispielsweise zwölf Klauen 8 auf, so dass pro Rotorring 5 jeweils sechs zweite Schenkel 9' im Bereich des axial vorderen Abschlusses 6 und je sechs zweite Schenkel 9' im Bereich des axial hinteren Abschlusses 6' des jeweiligen Rotorrings 5 nach radial innen verlaufen. Die Periodizität beträgt bei der Ausgestaltung der FIG 1 bis 3 somit 360°/6 = 60°. Bei acht Klauen 8 wäre die Periodizität dementsprechend 90°, bei vierundzwanzig Klauen 8 wäre sie 30°. Selbstverständlich sind die genannten Zahlen nur beispielhaft.

Nachfolgend wird nur auf das dargestellte Beispiel mit zwölf Klauen 8, d.h. der Periodizität 60°, näher eingegangen. Die Ausführungen sind jedoch in analoger Weise auf andere Periodizitäten übertragbar.

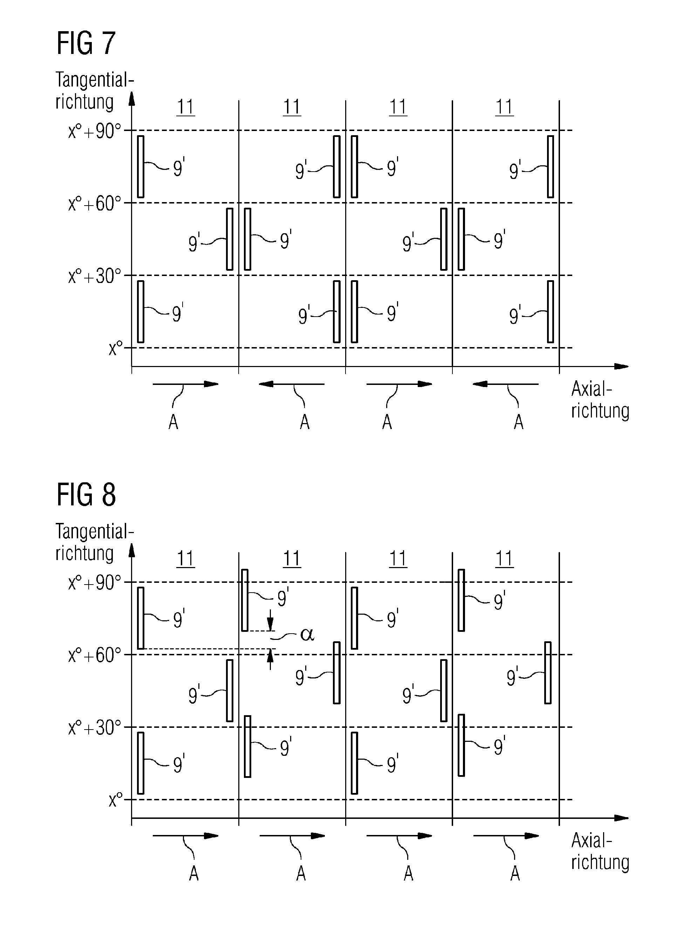

Es ist möglich, dass die Rotorringe 5 entsprechend den Darstellungen der FIG 1 bis 3 alle gleich ausgerichtet sind. Alternativ ist es möglich, dass in Axialrichtung aufeinander folgende Rotorringe 5 - zumindest in etwa - um die Hälfte der Periodizität gegeneinander verdreht sind, siehe FIG 7. Diese Ausgestaltung hat den Vorteil, dass die Flussrichtung des magnetischen Flusses in den einander zugewandten zweiten Schenkeln 9' benachbarter Rotorringe 5 gleichgerichtet ist. In diesem Fall muss zwar das von den entsprechenden Magnetfeldgeneratoren 11 generierte axiale Magnetfeld, wie in FIG 7 durch entsprechende Pfeile A angedeutet, gegensinnig gerichtet sein. Dies ist jedoch ohne Weiteres realisierbar. Aufgrund des Umstands, dass durch diese Ausgestaltung in Bezug auf in Axialrichtung aneinander angrenzende Rotorringe 5 die dem jeweils anderen Rotorring 5 zugewandten zweiten Schenkel 9' der Klauen 8 gleichsinnig magnetisiert sind, können die magnetischen Verluste minimiert werden.

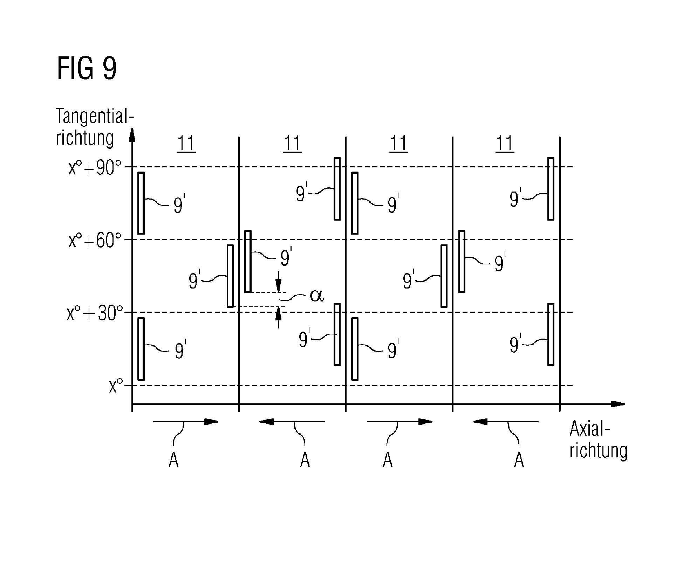

Alternativ oder zusätzlich ist es möglich, dass - siehe die FIG 8 und 9 - in Axialrichtung aneinander angrenzende Rotorringe 5 um einen Winkel α um die Rotationsachse 2 gegeneinander verdreht sind, der erheblich kleiner als die Periodizität ist. Insbesondere sollte der Winkel α maximal 1/6 der Periodizität sein.

Wie bereits erwähnt, können die Magnetfeldgeneratoren 11 alternativ als Permanentmagnete 12, als Elektromagnete 13 (mit Joch 14) oder als Kombination eines Permanentmagneten 12 und eines Elektromagneten 13 (mit Joch 14) ausgebildet sein. Weiterhin ist die Ausgestaltung der Magnetfeldgeneratoren 11 unabhängig voneinander. Es ist also möglich, einen der Magnetfeldgeneratoren 11 als Permanentmagneten 12 auszubilden, einen anderen als Elektromagneten 13 nebst Joch 14. Ebenso ist es möglich, einen der Magnetfeldgeneratoren 11 als Permanentmagneten 12 auszubilden, einen anderen als Kombination eines Permanentmagneten 12 und eines Elektromagneten 13 nebst Joch 14. Ebenso ist es möglich, einen der Magnetfeldgeneratoren 11 als Elektromagneten 13 nebst Joch 14 auszubilden, einen anderen der Magnetfeldgeneratoren 11 als Kombination eines Permanentmagneten 12 und eines Elektromagneten 13 nebst Joch 14. Wenn mindestens drei Magnetfeldgeneratoren 11 vorhanden sind, ist es sogar möglich, dass jede der genannten Ausgestaltungen mindestens einmal realisiert ist.

Die vorliegende Erfindung weist viele Vorteile auf. Insbesondere ergibt sich durch die räumliche Trennung der Einspeisung des Erregerfeldes vom drehmomentgenerierenden Luftspalt zwischen Rotor 1 und Stator 3 ein überlegenes Laufverhalten der Synchronmaschine bei vereinfachtem Aufbau und hoher Leistungsdichte. Aufgrund der statorfesten Erregereinrichtung 10 sind weiterhin in den Rotorringen 5 weder Permanentmagnete noch Elektromagnete erforderlich. Im Rotor 1, also dem am schwierigsten zu kühlenden Teil der Synchronmaschine, erfolgt somit nahezu keine Erwärmung aufgrund ohmscher Wicklungsverluste oder von Wirbelstromverlusten in Permanentmagneten. In der statorfesten Erregereinrichtung 10 auftretende Verluste lassen sich hingegen vergleichsweise einfach durch Kühlung abführen. Weiterhin durchdringt das durch die Wicklungen 4 statorseitig aufgebaute Magnetfeld nur zu einem geringen Teil die Magnetfeldgeneratoren 11 der statorfesten Erregereinrichtung 10. Im Falle eines statorseitigen Kurzschlusses und den damit verbundenen hohen Strömen ist somit eine Entmagnetisierung von Permanentmagneten 12 relativ einfach auszuschließen. Aufgrund des Umstands, dass weder über Schleifringe noch über einen Übertrager Energie in den Rotor 1 übertragen werden muss, arbeitet der Rotor 1 verschleißfrei, zuverlässig und effizient. Die axiale Ausdehnung der Klauen 8 kann vergleichsweise gering gehalten werden. Durch diese Ausgestaltung können Streueffekte reduziert werden. Der Gesamtleistungsbedarf der Synchronmaschine kann, soweit erforderlich, durch eine Serienanordnung mehrerer Rotorringe 5 hintereinander erreicht werden.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Synchronmaschine,
- wobei die Synchronmaschine einen um eine Rotationsachse (2) rotierbaren Rotor (1) und einen den Rotor (1) radial außen umgebenden Stator (3) aufweist,
- wobei der Rotor (1) in Axialrichtung gesehen eine Anzahl von tangential um die Rotationsachse (2) umlaufenden Rotorringen (5) aufweist,
- wobei die Rotorringe (5) in Axialrichtung gesehen jeweils einen axial vorderen und einen axial hinteren Abschluss (6, 6') aufweisen,
- wobei die Rotorringe (5) in Radialrichtung gesehen jeweils einen radial inneren und einen radial äußeren Abschluss (7, 7') aufweisen,
- wobei die Rotorringe (5) in Tangentialrichtung um die Rotationsachse (2) gesehen jeweils eine Mehrzahl von aus einem weichmagnetischen Material bestehenden Klauen (8) aufweisen,
- wobei die Klauen (8) L-förmig ausgebildet sind, so dass sie jeweils einen ersten und einen zweiten Schenkel (9,9') aufweisen,
- wobei die ersten Schenkel (9) den an den Stator (3) angrenzenden radial äußeren Abschluss (7') des jeweiligen Rotorrings (5) bilden,
- wobei die zweiten Schenkel (9') alternierend im Bereich des axial vorderen und des axial hinteren Abschlusses (6,6') des jeweiligen Rotorrings (5) nach radial innen verlaufen,
- wobei die Synchronmaschine eine statorfeste Erregereinrichtung (10) aufweist, die für die Rotorringe (5) jeweils einen mit dem jeweiligen Rotorring (5) zusammenwirkenden Magnetfeldgenerator (11) aufweist,
- wobei der jeweilige Magnetfeldgenerator (11) radial innerhalb des jeweiligen Rotorrings (5) angeordnet ist, ein in Axialrichtung gerichtetes Magnetfeld generiert und im Bereich des radial inneren Abschlusses (7) magnetisch an die zweiten Schenkel (9') der Klauen (8) des jeweiligen Rotorrings (5) angekoppelt ist.

2. Synchronmaschine nach Anspruch 1, **dadurch gekennzeichnet, dass** der Magnetfeldgenerator (11) axial beidseitig mit jeweils einem Flussführungselement (15) abgeschlossen ist, mittels dessen der magnetische Fluss nach radial außen in die zweiten Schenkel (9') der Klauen (8) des jeweiligen Rotorrings (5) geleitet wird.

3. Synchronmaschine nach Anspruch 2, **dadurch gekennzeichnet, dass** die zweiten Schenkel (9') der Klauen (8) des jeweiligen Rotorrings (5) in zwei Flussabnehmerringe (16) übergehen, welche die Flussführungselemente (15) radial außen umgeben.

4. Synchronmaschine nach Anspruch 1, 2 oder 3, **dadurch gekennzeichnet, dass** die Rotorringe (5) im Bereich zwischen den Klauen (8) aus einem Füllmaterial (17) bestehen, das dia- oder paramagnetisch ist und elektrisch isolierend oder nur anisotrop leitend ist.

5. Synchronmaschine nach einem der obigen Ansprüche, **dadurch gekennzeichnet, dass** der Magnetfeldgenerator (11) als Permanentmagnet (12), als Elektromagnet (13) oder als Kombination eines Permanentmagneten (12) und eines Elektromagneten (13) ausgebildet ist.

6. Synchronmaschine nach einem der obigen Ansprüche, **dadurch gekennzeichnet, dass** ein radialer Abstand (r') der radial äußeren Seite der ersten Schenkel (9) in Tangentialrichtung um die Rotationsachse (2) gesehen variiert.

7. Synchronmaschine nach einem der obigen Ansprüche, **dadurch gekennzeichnet, dass** die Anzahl an Rotorringen (5) größer als eins ist.

8. Synchronmaschine nach Anspruch 7, **dadurch gekennzeichnet, dass** in Bezug auf in Axialrichtung aneinander angrenzende Rotorringe (5) die dem jeweils anderen Rotorring (5) zugewandten zweiten Schenkel (9') der Klauen (8) gleichsinnig magnetisiert sind.

9. Synchronmaschine nach Anspruch 7 oder 8, **dadurch gekennzeichnet, dass** die Rotorringe (5) in Tangentialrichtung um die Rotationsachse (2) gesehen eine Periodizität aufweisen, dass in Axialrichtung aneinander angrenzende Rotorringe (5) um einen Winkel (α) um die Rotationsachse (2) gegeneinander verdreht sind und dass der Winkel (α) kleiner als ein sechstel der Periodizität ist.

10. Synchronmaschine nach Anspruch 7, 8 oder 9, **dadurch gekennzeichnet, dass** einer der Magnetfeldgeneratoren (11) als Permanentmagnet (12) und ein anderer der Magnetfeldgeneratoren (11) als Elektromagnet (13) oder als Kombination eines Permanentmagneten (12) und eines Elektromagneten (13) ausgebildet ist oder dass der eine Magnetfeldgenerator (11) als Elektromagnet (13) und der andere Magnetfeldgenerator (11) als Kombination eines Permanentmagneten (12) und eines Elektromagneten (13) ausgebildet ist.

## Geänderte Patentansprüche

### Geänderte Patentansprüche gemäss Regel 137(2) EPÜ.

**1.** Synchronmaschine,
- wobei die Synchronmaschine einen um eine Rotationsachse (2) rotierbaren Rotor (1) und einen den Rotor (1) radial außen umgebenden Stator (3) aufweist,
- wobei der Rotor (1) in Axialrichtung gesehen eine Anzahl von tangential um die Rotationsachse (2) umlaufenden Rotorringen (5) aufweist,
- wobei die Rotorringe (5) in Axialrichtung gesehen jeweils einen axial vorderen und einen axial hinteren Abschluss (6, 6') aufweisen,
- wobei die Rotorringe (5) in Radialrichtung gesehen jeweils einen radial inneren und einen radial äußeren Abschluss (7, 7') aufweisen,
- wobei die Rotorringe (5) in Tangentialrichtung um die Rotationsachse (2) gesehen jeweils eine Mehrzahl von aus einem weichmagnetischen Material bestehenden Klauen (8) aufweisen,
- wobei die Klauen (8) L-förmig ausgebildet sind, so dass sie jeweils einen ersten und einen zweiten Schenkel (9,9') aufweisen,
- wobei die ersten Schenkel (9) den an den Stator (3) angrenzenden radial äußeren Abschluss (7') des jeweiligen Rotorrings (5) bilden,
- wobei die zweiten Schenkel (9') alternierend im Bereich des axial vorderen und des axial hinteren Abschlusses (6,6') des jeweiligen Rotorrings (5) nach radial innen verlaufen,
- wobei die Synchronmaschine eine statorfeste Erregereinrichtung (10) aufweist, die für die Rotorringe (5) jeweils einen mit dem jeweiligen Rotorring (5) zusammenwirkenden Magnetfeldgenerator (11) aufweist,
- wobei der jeweilige Magnetfeldgenerator (11) radial innerhalb des jeweiligen Rotorrings (5) angeordnet ist, ein in Axialrichtung gerichtetes Magnetfeld generiert und im Bereich des radial inneren Abschlusses (7) magnetisch an die zweiten Schenkel (9') der Klauen (8) des jeweiligen Rotorrings (5) angekoppelt ist,
- wobei ein radialer Abstand (r') der radial äußeren Seite der ersten Schenkel (9) in Tangentialrichtung um die Rotationsachse (2) gesehen variiert.

**2.** Synchronmaschine nach Anspruch 1, **dadurch gekennzeichnet, dass** der Magnetfeldgenerator (11) axial beidseitig mit jeweils einem Flussführungselement (15) abgeschlossen ist, mittels dessen der magnetische Fluss nach radial außen in die zweiten Schenkel (9') der Klauen (8) des jeweiligen Rotorrings (5) geleitet wird.

**3.** Synchronmaschine nach Anspruch 2, **dadurch gekennzeichnet, dass** die zweiten Schenkel (9') der Klauen (8) des jeweiligen Rotorrings (5) in zwei Flussabnehmerringe (16) übergehen, welche die Flussführungselemente (15) radial außen umgeben.

**4.** Synchronmaschine nach Anspruch 1, 2 oder 3, **dadurch gekennzeichnet, dass** die Rotorringe (5) im Bereich zwischen den Klauen (8) aus einem Füllmaterial (17) bestehen, das dia- oder paramagnetisch ist und elektrisch isolierend oder nur anisotrop leitend ist.

**5.** Synchronmaschine nach einem der obigen Ansprüche, **dadurch gekennzeichnet, dass** der Magnetfeldgenerator (11) als Permanentmagnet (12), als Elektromagnet (13) oder als Kombination eines Permanentmagneten (12) und eines Elektromagneten (13) ausgebildet ist.

**6.** Synchronmaschine nach einem der obigen Ansprüche, **dadurch gekennzeichnet, dass** der radiale Abstand (r') der radial äußeren Seite der ersten Schenkel (9) zu den in Tangentialrichtung gesehen benachbarten ersten Schenkeln (9) hin minimal wird.

**7.** Synchronmaschine nach einem der obigen Ansprüche, **dadurch gekennzeichnet, dass** die Anzahl an Rotorringen (5) größer als eins ist.

**8.** Synchronmaschine nach Anspruch 7, **dadurch gekennzeichnet, dass** in Bezug auf in Axialrichtung aneinander angrenzende Rotorringe (5) die dem jeweils anderen Rotorring (5) zugewandten zweiten Schenkel (9') der Klauen (8) gleichsinnig magnetisiert sind.

**9.** Synchronmaschine nach Anspruch 7 oder 8, **dadurch gekennzeichnet, dass** die Rotorringe (5) in Tangentialrichtung um die Rotationsachse (2) gesehen eine Periodizität aufweisen, dass in Axialrichtung aneinander angrenzende Rotorringe (5) um einen Winkel (α) um die Rotationsachse (2) gegeneinander verdreht sind und dass der Winkel (α) kleiner als ein sechstel der Periodizität ist.

**10.** Synchronmaschine nach Anspruch 7, 8 oder 9, **dadurch gekennzeichnet, dass** einer der Magnetfeldgeneratoren (11) als Permanentmagnet (12) und ein anderer der Magnetfeldgeneratoren (11) als Elektromagnet (13) oder als Kombination eines Permanentmagneten (12) und eines Elektromagneten (13) ausgebildet ist oder dass der eine Magnetfeldgenerator (11) als Elektromagnet (13) und der andere Magnetfeldgenerator (11) als Kombination eines Permanentmagneten (12) und eines Elektromagneten (13) ausgebildet ist.
